# EUROPÄISCHE PATENTANMELDUNG

(11) **EP 0 813 101 A1**
(43) Veröffentlichungstag der Anmeldung: **17.12.1997**
(21) Anmeldenummer: 97109175.6
(22) Anmeldetag: 06.06.1997
(51) Int. Cl.: G03B 17/24, H04N 5/232

(54) **Vorrichtung zum Herstellen von Abbildungen**

(30) Priorität: 11.06.1996 DE 29610040 U
(71) Anmelder: Müller, Siegbert, 78532 Tuttlingen (DE); Von Muschwitz, Jo, 70180 Stuttgart (DE)
(72) Erfinder: Müller, Siegbert, 78532 Tuttlingen (DE)
(74) Vertreter: Kohl, Karl-Heinz

(57) **Zusammenfassung**

Bei der Vorrichtung werden Abbildungen mit Hilfe eines optischen Systems (2) in einer Kamera (1) auf einem Bildträger, z.B. einem Film, einer Diskette, einem Magnetstreifen oder dergleichen hergestellt. Solche Vorrichtungen sind beispielsweise Fotoapparate, Sofortbildkameras, Videokameras oder dergleichen. Die erfindungsgemäße Vorrichtung bezieht sich v.a. auf eine sogenannte One-Way-Kamera oder auch Wegwerfkamera, bei der der Bildträger integriert ist. Um Manipulationen mit solchen Kameras zu verhindern, ist der Kamera (1) ein Datenträger (4) zum unbeeinflußbaren Übertragen von Daten auf den Bildträger beim Herstellen der Abbildung zugeordnet. Beispielsweise ist es mit dieser Vorrichtung nicht mehr möglich, eine Aufnahme eines Unfallautos zu einem späteren Zeitpunkt, als demjenigen, zu dem der Unfall geschah, zu erstellen.

## Beschreibung

Die Erfindung betrifft eine Vorrichtung zum Herstellen von Abbildungen mit Hilfe eines optischen Systems in einer Kamera auf einem Bildträger, z.B. einem Film, einer Diskette, einem Magnetstreifen od. dgl..

Derartige Vorrichtungen sind beispielsweise als Photoapparate, Sofortbildkameras, Videokameras od. dgl. bekannt. Sie werden in vielen Fällen des täglichen Lebens verwendet und dienen dazu, Geschehnisse, Abläufe, Gegenstände, Landschaften od. dgl. auf einem Bildträger festzuhalten.

Die vorliegende Erfindung bezieht sich vor allem auf die sog: One-Way-Kameras oder auch Wegwerfkameras, bei denen der Bildträger integriert ist und die vor allem zur Aufnahme von Autounfällen, Betriebsunfällen, eben zur Beweissicherung von bestimmten Abläufen dienen. Hier hat es sich in der Vergangenheit herausgestellt, daß derartige Kameras leicht manupuliert werden können, da beispielsweise ein Autounfall zu einem späteren Zeitpunkt mit einem Auto des gleichen Typs aber einem erheblicheren Schaden nachgestellt wird. Durch derartig manupulierte Beweismittel von Geschehnissen entstehen den Versicherungen Schäden in Millionenhöhe.

Der vorliegenden Erfindung liegt die Aufgabe zugrunde, eine Vorrichtung der o.g. Art zu schaffen, bei der eine derartige Manupulation ausgeschlossen ist.

Zur Lösung dieser Aufgabe führt, daß der Kamera ein Datenträger zum unbeeinflußbaren Übertragen von Daten auf den Bildträger beim Herstellen der Abbildung zugeordnet ist.

Durch diese Erfindung wird es möglich, den Bildträger beim Herstellen der Abbildung so zu kennzeichnen, daß eine Manipulation auffallen wurde. Beispielsweise ist es jetzt nicht mehr möglich, eine Aufnahme eines Unfallautos zu einem späteren Zeitpunkt, als demjenigen, zu dem der Unfall geschah, zu erstellen. D.h., daß beispielsweise eine Versicherungsgesellschaft die Sicherheit hat, daß der ihr zur Verfügung gestellte Bildträger tatsächlich auch zu dem Zeitpunkt erstellt wurde, zu dem der Unfall geschah. Der Bildträger gibt somit die tatsächlichen Geschehnisse und insbesondere den tatsächlichen Schaden wieder.

Als Datenträger bietet sich in der heutigen Zeit ein Chip an, in dem Elemente zum Registrieren und zum Nachführen von insbesondere Datum und Zeit enthalten sind. Ein derartiger Chip befindet sich heute in jedem üblichen PC und ist handelsüblich. Deshalb wird auf eine nähere Beschreibung verzichtet. Wichtig ist, daß dem Chip noch eine Energiezelle zugeordnet ist, die gewährleistet, daß der Chip über einen längeren Zeitraum, beispielsweise über zwei Jahre, Datum und Uhrzeit nachstellen kann.

Möglich ist aber auch, den Chip so auszubilden, daß er, wie eine Funkuhr, die entsprechenden Daten von einem Satelliten od. dgl. empfangen kann. Hierdurch ist es möglich, daß beispielsweise der Chip nur bei Betätigung des Auslösers aktiviert wird, so daß er im gleichen Augenblick seine Daten an den Bildträger abgeben kann. Hierdurch wird nochmals gesichert gewährleistet, daß diese bestimmten Daten nicht manipuliert werden können.

Als Bildträger kommt sowohl ein einfacher Film als auch, wie z.B. bei einer Videokamera, ein Magnetstreifen in Frage. Es kann sich aber auch um ein Sofortbild oder um einen digitalen Datenträger handeln, vom Erfindungsgedanken werden alle denkbaren und heute verwendeten Bildträger umfaßt.

Die Übertragung der Daten auf den Bildträger geschieht bevorzugt durch das optische System. Hierzu blendet der Datenträger die Daten in das optische System ein, was ebenfalls auf beliebige Weise geschehen kann und bei heutigen Kameras auch handelsüblich ist. Allerdings können bei den heutigen Kameras die Daten des Datenträgers von außen verändert und auch ausgeblendet werden, was eben gemäß der vorliegenden Erfindung gerade nicht geschehen soll.

Die Übertragung der Daten auf einen Magnetstreifen oder in einen digitalen Bildträger kann selbstverständlich auch auf andere Art und Weise erfolgen.

Als Daten kommen eine Vielzahl von Möglichkeiten in Betracht. Dazu gehören nicht nur Datum und Uhrzeit, sondern beispielsweise auch Seriennummern des Datenträgers oder der Kamera od. dgl..

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine blockschaltbildliche Ansicht einer erfindungsgemäßen Vorrichtung;
Figur 2 eine Draufsicht auf einen schematisch dargestellten Bildträger.

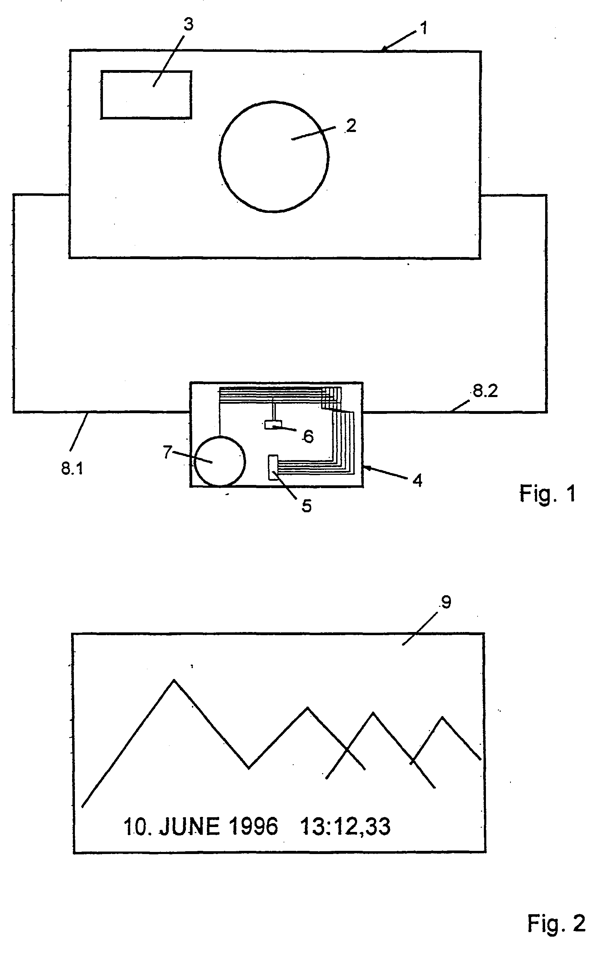

In Figur 1 ist schematisch eine Kamera 1 dargestellt, welche ein optisches System 2 aufweist. Über dieses optische System 2 können Abbildungen auf einem Bildträger erstellt werden. Zum Anvisieren der Abbildung ist deshalb ein Sucher 3 vorgesehen.

Erfindungsgemäß ist dieser Kamera 1 ein Datenträger zugeordnet, der im vorliegenden Ausführungsbeispiel aus einem Chip 4 besteht. Dieser Datenträger soll entsprechende Bauelemente 5 und 6 aufweisen, welche Daten, insbesondere Datum und Uhrzeit aufzeichnen bzw. nachstellen. Zur Versorgung der Bauelemente 5 und 6 ist eine Energiezelle 7 vorgesehen. Bevorzugt sind Bauelemente 5, 6 und Energiezelle 7 zusammen zu dem Chip 4 vergossen, so daß sie von außen ohne Zerstörung des Chips nicht veränderbar sind.

Die Leitungen 8.1 und 8.2 deuten an, daß der Chip 4 mit der Kamera 1 verbunden ist. In der Regel durfte jedoch der Chip 4 in der Kamera 1 integriert sein, so daß er ohne Zerstörung der Kamera nicht von der Kamera 1 getrennt werden kann.

In der Kamera 1 werden Abbildungen 9 hergestellt, wovon eine in Figur 2 angedeutet ist. Dabei bewirkt der Chip 4, daß auf der Abbildung 9 in jedem Fall und vom Bediener der Kamera unbeeinflußbar das Datum und die Uhrzeit aufgebracht werden.

## Patentansprüche

1. Vorrichtung zum Herstellen von Abbildungen (9) mit Hilfe eines optischen Systems (2) in einer Kamera (1) auf einem Bildträger, z.B. einem Film, einer Diskette, einem Magnetstreifen od. dgl.,
dadurch gekennzeichnet,
daß der Kamera (1) ein Datenträger (4) zum unbeeinflußbaren Übertragen von Daten auf den Bildträger beim Herstellen der Abbildung (9) zugeordnet ist.

2. Vorrichtung nach Anspruch 1, dadurch gekennzeichnet, daß der Datenträger ein Chip (4) ist, der Daten, insbesondere Datum, Uhrzeit od. dgl., auf den Bildträger überträgt.

3. Vorrichtung nach Anspruch 2, dadurch gekennzeichnet, daß dem Chip (4) eine Energiequelle (7) zugeordnet ist.

4. Vorrichtung nach Anspruch 2 oder 3, dadurch gekennzeichnet, daß der Chip (4) als Funkuhr mit einer Antenne zum Auffangen von Funksignalen betreffend Datum, Uhrzeit od. dgl. ausgebildet ist.

5. Vorrichtung nach wenigstens einem der Ansprüche 1 bis 4, dadurch gekennzeichnet, daß der Datenträger (4) die Daten in das optische System (2) einblendet.
